# EUROPÄISCHE PATENTSCHRIFT

(11) **EP 3 363 775 B1**
(45) Veröffentlichungstag und Bekanntmachung des Hinweises auf die Patenterteilung: **28.08.2019**
(21) Anmeldenummer: 17156922.1
(22) Anmeldetag: 20.02.2017
(51) Int. Cl.: C04B 26/26, C04B 18/02

(54) **VERFAHREN ZUR HERSTELLUNG EINER GRANULIERTEN THERMOPLASTISCHEN FÜLLMASSE**
METHOD FOR MAKING A GRANULAR THERMOPLASTIC FILLER
PROCÉDÉ DE FABRICATION D'UN MÉLANGE DE REMPLISSAGE THERMOPLASTIQUE EN GRANULÉS

(43) Veröffentlichungstag der Anmeldung: 22.08.2018
(73) Patentinhaber: Carl Ungewitter Trinidad Lake Asphalt GmbH & Co. KG, 28195 Bremen (DE)
(72) Erfinder: MÜLLER, Marco, 14612 Falkensee (DE); KNÖBIG, Andreas, 28335 Bremen (DE)
(74) Vertreter: Eisenführ Speiser

(56) Entgegenhaltungen:
- EP-A1- 2 899 172
- DE-A1- 10 010 451
- US-A- 2 978 351

## Beschreibung

Die vorliegende Erfindung betrifft gemäß einem primären Aspekt ein Verfahren zur Herstellung einer granulierten thermoplastischen Füllmasse. Die Erfindung betrifft zudem ein Verfahren zum Beseitigen von Oberflächenschäden in Beton-, Pflaster- oder Asphaltflächen oder zum Schließen von Bohrlöchern oder zum Schließen von Fahrbahnaufbrüchen oder zum Schließen von Fugen von Hochbauten mit Hilfe der erfindungsgemäß bereitgestellten granulierten thermoplastischen Füllmasse.

Geeignete Bauverfahren für die Erhaltung von Asphaltstraßen mit großer Ausdehnung und/oder Tiefe sind in der Regel in den einschlägigen Vorschriften und Merkblättern beschrieben, beispielsweise in "Zusätzliche Technische Vertragsbedingungen (ZTV) Asphalt" sowie in "Zusätzliche Technische Vertragsbedingungen und Richtlinien für die bauliche Erhaltung von Verkehrsflächenbefestigungen - Asphaltbauweisen" ZTV BEA-StB 09/13. Die in den vorgenannten Regelwerken beschriebenen baulichen Maßnahmen erfordern überwiegend den Einsatz von Großgerät mit entsprechend hohem Personalbedarf. Wirtschaftlich einsetzbar sind die bekannten baulichen Maßnahmen lediglich bei größeren Flächen und hohem Mengenbedarf. Die hergebrachten Methoden können insbesondere kleinvolumige Schadenserscheinungen ungleichmäßiger Art, wie z.B. unterschiedlich tiefe und breite Löcher, Aushöhlungen, Schürfe, Spalten klaffende Risse, flache Abtragungen und Ähnliches wirtschaftlich und/oder dauerhaft nicht beseitigen.

US 2,978,351 beschreibt einen gummierten Asphalt und dessen Herstellung, bei welcher eine Mineralstoffmischung und ein Bindemittel getrennt erhitzt und anschließend in einem Schaufel-Mischer vermischt werden.

DE 100 10 451 A1 beschreibt ein Verfahren zur Herstellung einer thermoplastischen Füllmasse zur Beseitigung von Oberflächenschäden in Beton- oder Asphaltflächen bzw. zum Einbringen in Fugen von Hochbauten, bei dem zunächst Splitt, Sand, ein mehlfeiner Stoff und ein bituminöses Bindemittel bei einer Temperatur von etwa 180 °C bis 240 °C homogen gemischt werden. Danach wird dem in ständiger Bewegung befindlichen Mischgut ein Kühlmittel schockartig zugesetzt. Die vor der Kühlmittelzugabe hoch klebefähige Masse zähflüssiger Konsistenz wird durch diese schockartige Zusetzung eines Kühlmittels in ein körnig-rolliges Kleingranulat ohne Zusammensetzung überführt, und zwar durch eine sehr hohe Oberflächenspannung der verschiedenen Bestandteile des Mischguts. Dieses Kleingranulat kann durch Aufheizung in eine gießfähige bzw. streichbare Spachtelmasse mit hoher Klebekraft verwandelt werden.

Nachteilig an dem in DE 100 10 451 A1 beschriebenen Verfahren ist, dass die Herstellung des Granulats den Einsatz eines Kühlmittels erforderlich macht, und dass das erhaltene Granulat eine undefinierte Körnung aufweist. Darüber hinaus muss das Granulat zur Herstellung der Füllmasse vor Ort in einem Aufwärmkessel aufgeheizt werden, um es in eine gießfähige bzw. streichbare Spachtelmasse umzuwandeln.

EP 2 899 172 A1 betrifft eine thermoplastische Füllmasse hergestellt oder herstellbar durch ein Verfahren umfassend oder bestehend aus dem Bereitstellen eines bestimmten Mineralstoffgemisches und eines Bindemittels in einem bestimmten Mischungsverhältnis, Erhitzen und Vermischen der bereitgestellten Komponenten, um eine Asphalt-Vormischung zu erhalten, Abkühlen und Zerkleinern der abgekühlten Asphalt-Vormischung zu Partikeln mit einem Durchmesser von jeweils 12 mm oder weniger, Vermischen der so erhaltenen Vormischung mit einem oder mehreren Trennmitteln und Absieben kleiner Partikel, sodass eine thermoplastische Füllmasse aus Partikeln mit einem durchschnittlichen Durchmesser im Bereich von 2 bis 12 mm erhalten wird.

Das in EP 2 899 172 A1 beschriebene Verfahren benötigt zwar keinen Einsatz eines Kühlmittels zur Herstellung des Granulats und weist eine sehr gut definierte und einheitliche Partikelgröße auf, der Zerkleinerungsschritt führt jedoch zu einer großen Menge an kleinen Partikeln, die während des letzten Schritts des dort offenbarten Verfahrens abgetrennt werden. Dies führt zu einer relativ großen Menge an Ausschussmaterial, was sich negativ auf die Produktionskosten auswirken kann.

Der Erfindung liegt demgemäß ausgehend vom Stand der Technik die Aufgabe zugrunde, ein verbessertes Verfahren zur Herstellung einer thermoplastischen Füllmasse aus einer Asphalt-(Vor-)Mischung bereitzustellen, mit welcher, insbesondere kurzfristig, auch kleinvolumige Schadenserscheinungen wirtschaftlich und dauerhaft beseitigt werden können.

Die Aufgabe wird primär gelöst durch ein Verfahren zur Herstellung einer granulierten thermoplastischen Füllmasse, bestehend aus oder umfassend folgende Schritte:
a) Bereitstellen von wenigstens einem mineralischen Bestandteil und wenigstens einem Bitumen-haltigen Bindemittel, sowie optional einem oder mehreren weiteren Bestandteilen,
   und Erhitzen und Vermischen der bereitgestellten Bestandteile auf eine Temperatur im Bereich von 70 bis 250 °C, bevorzugt von 150 bis 200 °C, besonders bevorzugt bis 180 °C, um eine Asphalt-Vormischung (V) zu erhalten,
   wobei die Gesamtmenge an mineralischem/n Bestanteil(en), bezogen auf das Gesamtgewicht der Asphalt-Vormischung (V), im Bereich von 40 bis 99 M.-%, vorzugsweise von 75 bis 98 M.-%, besonders bevorzugt im Bereich von 90 bis 96 M.-%, liegt,
b) Einbringen der Asphalt-Vormischung (V) aus Schritt a) in einen kontinuierlich rotierenden Behälter und kontinuierliche Bewegung der Asphalt-Vormischung (V), bevorzugt über einen Zeitraum von 5 bis 30, besonders bevorzugt von 10 bis 20 Minuten, in besagtem Behälter zur Abkühlung der Asphalt-Vormischung (V) und zur Herstellung der granulierten thermoplastischen Füllmasse,
c) Zugabe eines oder Zugabe von mehreren, vorzugsweise mineralischen, Trennmitteln und/oder anderer/weiterer Bestandteile in trockener, gelöster oder dispergierter Form zur Asphalt-Vormischung (V) vor und/oder während des Einbringens der Asphalt-Vormischung (V) in den kontinuierlich rotierenden Behälter in Schritt b) und/oder zur Asphalt-Vormischung (V) bzw. granulierten thermoplastischen Füllmasse während des kontinuierlichen Bewegens in Schritt b), wobei das Lösungsmittel bzw. Dispersionsmittel, falls vorhanden, aufgrund der Temperatur der Asphalt-Vormischung (V) bzw. der granulierten thermoplastischen Füllmasse teilweise oder vorzugsweise vollständig verdampft und dabei die Temperatur der Asphalt-Vormischung (V) bzw. der granulierten thermoplastischen Füllmasse weiter absenkt,
d) Herausbefördern der granulierten thermoplastischen Füllmasse aus dem kontinuierlich rotierenden Behälter,
e) optional teilweises oder vollständiges Entfernen von Partikeln mit einem Durchmesser von > 30 mm, falls vorhanden, bevorzugt von > 15 mm, falls vorhanden, besonders bevorzugt von > 8 mm, falls vorhanden,
   sodass vorzugsweise eine granulierte thermoplastische Füllmasse erhalten wird, worin wenigstens 90 M.-% der Füllmasse als Partikel mit einem Durchmesser von ≤ 30 mm, bevorzugt von ≤ 15 mm, besonders bevorzugt von ≤ 8 mm, vorliegen,
   und
   optional teilweises oder vollständiges Entfernen von Partikeln mit einem Durchmesser von < 0,5 mm, falls vorhanden, bevorzugt von < 1,0 mm, falls vorhanden, besonders bevorzugt von < 2,0 mm, falls vorhanden,
   sodass vorzugsweise eine granulierte thermoplastische Füllmasse erhalten wird, worin wenigstens 90 M.-% der Füllmasse als Partikel mit einem Durchmesser von ≥ 0,5 mm, bevorzugt von ≥ 1,0 mm, besonders bevorzugt von ≥ 2,0 mm, vorliegen;
   wobei zwischen Schritt a) und Schritt b) folgender weiterer Schritt stattfindet:
   Aufbringen der in Schritt a) erhaltenen Asphalt-Vormischung (V) auf ein mehrteiliges Förderbandsystem mit jeweils steigender Geschwindigkeit der Förderbänder zur räumlichen Entzerrung der Asphalt-Vormischung (V) (s. hierzu weitere Ausführungen unten).

Im Rahmen der vorliegenden Erfindung beziehen sich die Begriffe "Korngröße" bzw. "Durchmesser" vorzugsweise auf die maximale räumliche Ausdehnung eines Korns bzw. Partikels.

Vorzugsweise kommt es in Schritt a) des erfindungsgemäßen Verfahrens zu einer homogenen Durchmischung des/der mineralischen Bestandteils/Bestandteile und des/der Bindemittel(s) in der gebildeten Asphalt-Vormischung (V). Diese homogene Durchmischung und Erwärmung der Bestandteile in Schritt a) führt vorzugsweise zur Aktivierung bestimmter vorteilhafter Stoffeigenschaften (beispielsweise kann es durch die Durchmischung und Erwärmung zur Vernetzung bestimmter Polymere im Bitumen, falls vorhanden, kommen).

Gemäß einer bevorzugten Ausführungsform werden in Schritt a) des erfindungsgemäßen Verfahrens der wenigstens eine mineralische Bestandteil und das wenigstens eine Bindemittel durch einen einzigen Stoff, vorzugsweise durch Naturasphalt, der mineralische und Bindemittelanteile enthält, bereitgestellt.

Gemäß einer bevorzugten Ausführungsform ist der kontinuierlich rotierende Behälter in den Schritten b) und c) des erfindungsgemäßen Verfahrens geneigt. Durch die negative Steigung wird die granulierte thermoplastische Füllmasse gravimetrisch zum Behälterausgang gefördert. Die Steigung ist dabei variabel und wird derart eingestellt, dass die granulierte thermoplastische Füllmasse beim Herausbefördern aus dem kontinuierlich rotierenden Behälter in Schritt d) eine Temperatur von ca. 15 bis 25 °C, bevorzugt von 20 °C, aufweist.

Unter dem Begriff Granulieren ist im Rahmen der vorliegenden Erfindung das Verwandeln von entweder großen Partikeln und/oder von sehr kleinen Partikeln mit unterschiedlicher Partikelgröße in ein Haufwerk mit Partikeln enger Partikelgrößenverteilung zu verstehen. Granulieren ist eine Technik, die in vielen Bereichen Anwendung findet und in der Regel dazu dient, den Stoff besser (weiter)verarbeiten zu können. Unter der in den Schritten b) und c) des erfindungsgemäßen Verfahrens beschriebenen granulierten thermoplastischen Füllmasse ist demnach eine Mischung zu verstehen, die im Vergleich zur Asphalt-Vormischung (V) eine engere Partikelgrößenverteilung aufweist.

Gemäß einer weiteren bevorzugten Ausführungsform werden in Schritt c) Wasser oder wässrige Lösungen als Lösungsmittel bzw. Dispersionsmittel, falls verwendet, eingesetzt.

Das erfindungsgemäße Verfahren ist besonders vorteilhaft, da z.B. durch das ständige Bewegen der Asphalt-Vormischung (V) bzw. der granulierten thermoplastischen Füllmasse beim Abkühlen in Schritt b) und während der Zugabe eines mineralischen Trennmittels und/oder anderer/weiterer Bestandteile in Schritt c) ein Zusammenhaften der Partikel effektiv verhindert wird und somit eine sehr uniforme Partikelgröße erzielt wird. Abhängig von beispielsweise der Wahl der Korngröße der mineralischen Bestandteile, der Menge und Art von zugesetztem Bindemittel und der Geschwindigkeit des kontinuierlich rotierenden Behälters in den Schritten b) und c) können granulierte thermoplastische Füllmassen mit unterschiedlichen Partikelgrößen mit einer engen Partikelgrößenverteilung unter Verwendung der selben Produktionslinie erhalten werden. Durch die Möglichkeit der Beimischung verschiedener anderer/weiterer Bestandteile in Schritt c) wie vorangehend definiert, können des Weiteren verschiedenartige thermoplastische Füllmassen mit funktionalen Eigenschaften für verschiedenste Anwendungen produziert werden. Das erfindungsgemäße Verfahren ist somit sehr flexibel und die Produktion von Ausschussmaterial wird minimiert.

Gemäß einer bevorzugten Ausführungsform des erfindungsgemäßen Verfahrens werden in Schritt e) nur Partikel mit einem Durchmesser von > 30 mm, falls vorhanden, bevorzugt von > 15 mm, falls vorhanden, besonders bevorzugt von > 8 mm, falls vorhanden, teilweise oder vollständig entfernt, sodass vorzugsweise eine granulierte thermoplastische Füllmasse erhalten wird, worin wenigstens 90 M.-% der Füllmasse als Partikel mit einem Durchmesser von ≤ 30 mm, bevorzugt von ≤ 15 mm, besonders bevorzugt von ≤ 8 mm, vorliegen. Gemäß dieser Ausführungsform verbleiben daher besonders feine Anteile, falls vorhanden, in der granulierten thermoplastischen Füllmasse, wohingegen besonders grobe Anteile entfernt werden.

Gemäß einer anderen bevorzugten Ausführungsform des erfindungsgemäßen Verfahrens werden in Schritt e) nur Partikel mit einem Durchmesser von < 0,5 mm, falls vorhanden, bevorzugt von < 1,0 mm, falls vorhanden, besonders bevorzugt von < 2,0 mm, falls vorhanden, teilweise oder vollständig entfernt, sodass vorzugsweise eine granulierte thermoplastische Füllmasse erhalten wird, worin wenigstens 90 M.-% der Füllmasse als Partikel mit einem Durchmesser von ≥ 0,5, bevorzugt von ≥ 1,0 mm, besonders bevorzugt von ≥ 2,0, vorliegen. Gemäß dieser Ausführungsform verbleiben besonders grobe Anteile, falls vorhanden, in der granulierten thermoplastischen Füllmasse, wohingegen besonders feine Anteile entfernt werden.

Gemäß einer besonders bevorzugten Ausführungsform des erfindungsgemäßen Verfahrens werden in Schritt e) Partikel mit einem Durchmesser von > 30 mm, falls vorhanden, bevorzugt von > 15 mm, falls vorhanden, besonders bevorzugt von > 8 mm, falls vorhanden, und Partikel mit einem Durchmesser von < 0,5 mm, falls vorhanden, bevorzugt von < 1,0 mm, falls vorhanden, besonders bevorzugt von < 2,0 mm, falls vorhanden, teilweise oder vollständig entfernt, sodass vorzugsweise eine granulierte thermoplastische Füllmasse erhalten wird, worin wenigstens 90 M.-% der Füllmasse als Partikel mit einem Durchmesser von ≥ 0,5 mm bis ≤ 30 mm, bevorzugt von ≥ 1,0 mm bis ≤ 30 mm, weiter bevorzugt von ≥ 2,0 mm bis ≤ 30 mm, weiter bevorzugt von ≥ 0,5 mm bis ≤ 15 mm, weiter bevorzugt von ≥ 1,0 mm bis ≤ 15 mm, weiter bevorzugt von ≥ 2,0 mm bis ≤ 15 mm, weiter bevorzugt von ≥ 0,5 mm bis ≤ 8 mm, weiter bevorzugt von ≥ 1,0 mm bis ≤ 8 mm, besonders bevorzugt von ≥ 2,0 mm bis ≤ 8 mm, vorliegen. Gemäß dieser Ausführungsform werden besonders feine und besonders grobe Anteile jeweils, falls vorhanden, aus der granulierten thermoplastischen Füllmasse entfernt.

Diejenigen Ausführungsformen des erfindungsgemäßen Verfahrens, in denen Partikel mit einem Durchmesser von < 0,5 mm, falls vorhanden, bevorzugt von < 1,0 mm, falls vorhanden, besonders bevorzugt von < 2,0 mm, teilweise oder vollständig entfernt werden, sind besonders vorteilhaft, wenn die granulierte thermoplastische Füllmasse in Verfahren einsetzt werden soll, in denen die Füllmasse bei (Asphalt-)Reparaturarbeiten eingesetzt wird. Bei solchen Reparaturarbeiten wird die Füllmasse vorzugsweise kalt in beispielweise ein Schlagloch im Asphalt eingefüllt, mit einem Gasbrenner oder dergleichen erwärmt bzw. erhitzt und anschließend verdichtet. Durch das Entfernen der besonders feinen Anteile der Füllmasse wird die Bildung einer geschlossenen Oberfläche beim Einfüllen verhindert, und so kann die Wärme bzw. Hitze des Gasbrenners (oder dergleichen) problemlos tief in die Füllmasse eindringen und diese schnell und effizient erwärmen bzw. erhitzen. Die Reparaturarbeiten können so zeit- und energiesparend durchgeführt werden.

Wie oben beschrieben, findet im erfindungsgemäßen Verfahren zwischen Schritt a) und Schritt b) folgender weiterer Schritt statt:
Aufbringen der in Schritt a) erhaltenen Asphalt-Vormischung (V) auf ein mehrteiliges Förderbandsystem mit jeweils steigender Geschwindigkeit der Förderbänder zur räumlichen Entzerrung der Asphalt-Vormischung (V).

Ein solches erfindungsgemäßes Verfahren ist besonders vorteilhaft, da die räumliche Entzerrung der Partikel der Asphalt-Vormischung (V) vor dem Einbringen in den kontinuierlich rotierenden Behälter in Schritt b) dazu führt, dass die Partikel einzeln und nacheinander in den Behälter fallen und somit eine Verklumpung der Partikel im kontinuierlich rotierenden Behälter verhindert bzw. minimiert wird. Dies führt zu einer weiteren Reduktion von Ausschussmaterial. Zudem dient der besagte weitere Schritt, falls vorhanden, als erster Schritt der Abkühlung der in Schritt a) erhaltenen Asphalt-Vormischung (V).

Bei Vorhandensein dieses besagten weiteren Schritts zwischen den Schritten a) und b) des erfindungsgemäßen Verfahrens - wie erfindungsgemäß der Fall - wird in Schritt b) nicht die Asphalt-Vormischung (V) aus Schritt a) in den kontinuierlich rotierenden Behälter eingebracht, sondern die auf dem Förderband entzerrte Asphalt-Vormischung (V).

Gemäß einer weiteren bevorzugten Ausführungsform des erfindungsgemäßen Verfahrens umfasst die Asphalt-Vormischung (V) bzw. die granulierte thermoplastische Füllmasse ein Mineralstoffgemisch, bestehend aus oder enthaltend, jeweils bezogen auf das Gesamtgewicht des Mineralstoffgemischs,
(i) 0 bis 30 M.-%, bevorzugt 0 bis 25 M.-%, besonders bevorzugt 0 bis 15 M.-%, Füllstoff aus mineralischen Bestandteilen mit einer Korngröße von ≤ 0,063 mm,
(ii) 0 bis 100 M.-%, bevorzugt 20 bis 100 M.-%, besonders bevorzugt 35 bis 100 M.-%, einer Gesteinskörnung aus Gesteinskörnern mit einer Korngröße im Bereich von > 0,063 mm bis ≤ 2 mm,
   und
(iii) 0 bis 85 M.-%, bevorzugt 0 bis 70 M.-%, besonders bevorzugt 0 bis 60 M.-% einer Gesteinskörnung aus Gesteinskörnern mit einer Korngröße von > 2mm,
wobei wenigstens einer der Bestandteile (i) bis (iii) > 0 M.-% ist.

Je nach geplantem Anwendungsbereich der thermoplastischen Füllmasse (z.B. als Spachtelmasse zur Korrektur kleiner Risse oder zum Füllen großer Löcher in Asphaltdecken) kann der Fachmann die jeweils geeignete Mineralstoffgemisch-Zusammensetzung wählen bzw. einstellen. Vorteilhafterweise können auch unterschiedliche thermoplastische Füllmassen mit unterschiedlichen Mineralstoffgemischen zum Einsatz kommen. So ist es z.B. denkbar, dass beim Verfüllen großer Löcher, zuerst eine thermoplastische Füllmasse mit mineralischen Bestandteilen relativ großer Korngröße und anschließend eine thermoplastische Füllmasse mit mineralischen Bestandteilen kleinerer Korngröße eingebracht werden.

Gemäß einer weiteren bevorzugten Ausführungsform des erfindungsgemäßen Verfahrens umfasst die Asphalt-Vormischung (V) bzw. die granulierte thermoplastische Füllmasse einen oder mehrere Bestandteile der Gruppe bestehend aus Polymeren, bevorzugt Elastomere und Plastomere, Polymergranulaten, Polymerpulvern, Wachsen, vorzugsweise FT-Wachsen, Wachspulvern, Gummimehlen, Gummigranulaten, Naturasphaltpulvern, Naturasphaltgranulaten, Fettsäureamiden, Kalkhydraten, Cellulosefaserstoffen, Farbpigmenten, Rejuvenatoren, Kalksteinmehlen, modifizierten Kalksteinmehlen, Zeolithen, Gesteinsmehlen und Haftverbesserern, bevorzugt Haftverbesserern ausgewählt aus der Gruppe bestehend aus Fettpolyaminen, Fettmonoaminen, Aminoseifen und Stickstoffverbindungen.

Gemäß einer weiteren bevorzugten Ausführungsform des erfindungsgemäßen Verfahrens umfasst die Asphalt-Vormischung (V) bzw. die granulierte thermoplastische Füllmasse, vorzugsweise der Bestandteil (i) des Mineralstoffgemischs, falls vorhanden, einen oder mehrere Bestandteil(e) aus der Gruppe bestehend aus Kalksteinmehlen, modifizierten Kalksteinmehlen, Gesteinsmehlen, Kalkhydraten und Zeolithen.

Gemäß einer weiteren bevorzugten Ausführungsform des erfindungsgemäßen Verfahrens umfasst der Bestandteil (ii) des Mineralstoffgemischs, falls vorhanden, bezogen auf das Gesamtgewicht des Bestandteils (ii) 10 M.-% oder mehr, bevorzugt 20, 30, 40, 50 oder 60 M.-% oder mehr, vorzugsweise 70 M.-% oder mehr, Natursand oder besteht aus Natursand mit einer Korngröße von < 0,063 mm bis ≤ 2 mm. Unter Natursand wird im Zusammenhang mit der vorliegenden Erfindung ein Sand verstanden, der in loser Form in der Natur (im Gegensatz zu Brechsand) vorkommt und nicht durch mechanisches Brechen gewonnen wurde. Natursand ist für den vorgesehenen Verwendungszweck besser geeignet als Brechsand, da die Verfüllung und Bearbeitung einer Schadstelle mit Natursand wegen geringerer innerer Reibung einfacher möglich ist (die Verarbeitung kann per Hand und muss nicht maschinell erfolgen).

Gemäß einer weiteren bevorzugten Ausführungsform des erfindungsgemäßen Verfahrens besteht der Bestandteil (iii) des Mineralstoffgemischs, falls vorhanden, aus Gesteinskörnern mit einer Korngröße im Bereich von > 2 mm bis ≤ 22 mm, bevorzugt von > 2 mm bis ≤ 16 mm, besonders bevorzugt von > 2 mm bis ≤ 5 mm.

Im Hinblick auf die hierin beschriebenen Korngrößen bzw. Durchmesser gilt gemäß einer bevorzugten Ausgestaltung, dass
- der Durchmesser der Partikel der granulierten thermoplastischen Füllmasse und/oder
- die Korngröße der Bestandteile gemäß (i), (ii) und/oder (iii) des Mineralstoffgemischs, falls vorhanden,
und/oder
- der Durchmesser der Partikel der Vormischung (V)
gemäß TL Gestein-StB 2004/2007 bestimmt wird bzw. werden.

Besonders bevorzugt erfolgt die Bestimmung durch Absiebung in Anlehnung an die DIN EN 933-1.

Das Bitumen des Bitumen-haltigen Bindemittels weist vorzugsweise eine Penetration im Bereich von 20 bis 220 (0,1 mm) auf, gemessen nach DIN EN 1426. Bevorzugt ist auch, dass das Bitumen einen Erweichungspunkt im Bereich von 35 bis 90 °C aufweist, vorzugsweise von 35 bis 70 °C, gemessen nach DIN EN 1427.

Gemäß einer bevorzugten Ausführungsform ist der kontinuierlich rotierende Behälter in Schritt b) des Verfahrens wie vorangehend definiert eine Vorrichtung ausgewählt aus der Gruppe bestehend aus Granulierteller und Rund- bzw. Granuliertrommel.

Im erfindungsgemäßen Verfahren ist bzw. sind das bzw. ein, mehrere oder sämtliche Trennmittel, falls vorhanden, in Schritt c) ausgewählt aus der Gruppe bestehend aus Polymerpulvern, Wachspulvern, Gummimehlen, Naturasphaltpulvern, Haftverbesserern, Kalkhydraten, Cellulosefaserstoffen, Farbpigmenten, Kalksteinmehlen, modifizierten Kalksteinmehlen, Kieselguren, Diatomeenerden, Zeolithen und Acrylaten, vorzugsweise Acrylaten mit Polymerzusatz. Werden die vorgenannten Stoffe als Trennmittel in Schritt c) zugesetzt, werden diese vorzugsweise in das hintere Drittel des rotierenden Behälters eingebracht. Dies führt dazu, dass sich das/die in Schritt c) zugesetzte(n) Trennmittel, falls vorhanden, während der kontinuierlichen Rotierbewegung des Behälters nahezu ausschließlich an der Oberfläche der granulierten thermoplastischen Füllmasse anordnen.

Im erfindungsgemäßen Verfahren ist bzw. sind das bzw. ein, mehrere oder sämtliche anderen/weiteren Bestandteile, falls vorhanden, in Schritt c) ausgewählt aus der Gruppe bestehend aus Polymerpulvern, Wachspulvern, Gummimehlen, Naturasphaltpulvern, Fettsäureamiden, Haftverbesserern, Kalkhydraten, Cellulosefaserstoffen, Farbpigmenten, Kalksteinmehlen, modifizierte Kalksteinmehlen, Zeolithen und Acrylaten, vorzugsweise Acrylaten mit Polymerzusatz. Vorzugsweise handelt es sich bei den in Schritt c) des erfindungsgemäßen Verfahrens zugesetzten anderen/weiteren Bestandteilen, falls vorhanden, um Bestandteile, die zu funktionalen Eigenschaften der thermoplastischen Füllmasse beitragen können, z.B. um Bestandteile, die das Verformungsverhalten und/oder Kälteverhalten der thermoplastischen Füllmasse modifizieren. Die in Schritt c) zugesetzten anderen/weiteren Bestandteile wie vorangehend definiert, falls vorhanden, ordnen sich dabei während der kontinuierlichen Rotierbewegung des Behälters vorzugsweise innerhalb der gebildeten granulierten thermoplastischen Füllmasse oder an deren Oberfläche an.

Die vorliegende Erfindung betrifft gemäß eines weiteren Aspekts auch ein Verfahren zum Beseitigen von Oberflächenschäden in Beton-, Pflaster- oder Asphaltflächen oder zum Schließen von Bohrlöchern oder zum Schließen von Fahrbahnaufbrüchen oder zum Schließen von Fugen von Hochbauten, umfassend folgende Schritte:
- Bereitstellen einer granulierten thermoplastischen Füllmasse durch ein Verfahren wie hierin beschrieben, vorzugsweise wie hierin als bevorzugt beschrieben,
- Einbringen bzw. Aufbringen der granulierten thermoplastischen Füllmasse in bzw. auf die beschädigte Beton-, Pflaster- oder Asphaltfläche bzw. das zu verschließende Bohrloch bzw. den zu verschließenden Fahrbahnaufbruch bzw. die zu schließende Fuge,
   wobei die granulierte thermoplastische Füllmasse vor dem Ein- bzw. Aufbringen auf eine Temperatur im Bereich von 120 bis 230 °C, vorzugsweise auf 130 bis 170 °C, erhitzt wird.

Vorzugsweise wird die granulierte thermoplastische Füllmasse vor dem Ein- bzw. Aufbringen in einer transportablen Asphaltheizvorrichtung zum Aufheizen und Warmhalten von granulatförmigem Asphalt, mit einer Heiz- und Misch-Kammer, die einen Einlass zum Einfüllen von granulatförmigem Asphalt und einen Auslass zum Abgeben von aufgeheiztem Asphalt aufweist, einer Heizeinrichtung zum Aufheizen von in der Kammer befindlichem Asphalt, und einer antreibbaren Förderschnecke zum Mischen und Fördern von in der Kammer befindlichem Asphalt zwischen dem Einlass und dem Auslass, erhitzt, besonders bevorzugt in einer transportablen Asphaltheizvorrichtung wie in der deutschen Gebrauchsmusteranmeldung mit dem Aktenzeichen 20 2014 007324.4 beschrieben, insbesondere wie in den Ansprüchen der Gebrauchsmusteranmeldung beschrieben.

Ebenfalls hierin beschrieben wird eine granulierte thermoplastische Füllmasse, hergestellt oder herstellbar durch ein Verfahren wie hierin beschrieben, vorzugsweise wie hierin als bevorzugt beschrieben. Für bevorzugte Bestandteile, Schritte und Ausführungsformen gilt daher jeweils das oben Gesagte entsprechend.

Im Folgenden wird die vorliegende Erfindung anhand von Beispielen näher beschrieben. Dabei gilt für die nachfolgenden Beispiele sowie generell im Rahmen der vorliegenden Erfindung, dass die Abkürzung "M.-%" Massenprozent bedeutet.

Beispielhafte Zusammensetzungen von hierin beschriebenen thermoplastischen Füllmassen und erfindungsgemäße Herstellungsverfahren:

### Beispiel 1

Zusammensetzung des eingesetzten Mineralstoffgemisches (in Schritt a)):

| | |
|---|---|
| Bestandteil (i): | 8,0 M.-% Füller aus Kalksteinmehl/Gesteinsmehl/Kalkhydrat mit einer Korngröße von ≤ 0,063 mm |
| Bestandteil (ii): | 39,0 M.-% feine Gesteinskörnung mit einer Korngröße von > 0,063 mm bis ≤ 2 mm umfassend 90 M.-% Natursand |
| Bestandteil (iii): | 53,0 M.-% grobe Gesteinskörnung mit einer Korngröße von > 2 mm bis ≤ 5 mm |

(Anteil der Bestandteile (i) bis (iii) bezogen auf das Gesamtgewicht des Mineralstoffgemisches)
Eingesetztes Bindemittel (in Schritt a)):
7,14 M.-% Bitumen 70/100, optional umfassend FT-Wachs
(Anteil Bindemittel bezogen auf das Gesamtgewicht von mineralischen Bestandteilen und Bindemittel in der Vormischung (V))

### Herstellen einer Asphalt-Vormischung (V):

In einem ersten Schritt werden die Bestandteile (ii) und (iii) des Mineralstoffgemisches grob verwogen und über ein Abzugsband zum Trocknen in eine beheizte rotierende Trommel transportiert. Die Gesteine werden hier auf die erforderliche Temperatur (ca. 200 °C) erhitzt. Die Gesteine werden dann über Elevatoren zur sog. Heißabsiebung über eine Mischtrommel transportiert. Hier erfolgt die rezeptgenaue Verwiegung der benötigten Gesteine. Danach fällt die Gesteinsmischung in die Mischtrommel und homogenisiert sich mit der über einen parallelen Weg zugegebenen Füllermenge (Bestandteil (i)).

In einem nächsten Schritt wird über Bitumenleitungen das Bindemittel zugegeben. Es erfolgt eine chargenweise Homogenisierung der einzelnen Bestandteile während des folgenden Mischprozesses. Danach wird das fertige, heiße Material (Asphalt-Vormischung (V)) in Transportfahrzeuge oder in Silolager verladen. Die so erhaltene Asphalt-Vormischung (V) kann entweder gleich weiterverwendet werden (s. nächsten Schritt) oder bei Bedarf zunächst (zwischen-)gelagert werden.

### Herstellen einer granulierten thermoplastischen Füllmasse (Granulierung):

Die im vorangehenden Schritt erhaltene Asphalt-Vormischung (V) wird zur räumlichen Entzerrung auf ein mehrteiliges Förderbandsystem mit jeweils steigender Geschwindigkeit der Förderbänder aufgebracht. Anschließend wird im letzten Drittel der Förderbänder auf die Asphalt-Vormischung (V) eine wasserlösliche Granulierungshilfe (z.B. Acrylat) aufdosiert (ca. 1,5 M.-% in Bezug auf die Asphalt-Vormischung (V)) und die Asphalt-Vormischung (V) wird in eine rotierende Granuliertrommel weiterbefördert. Die Mischung verbleibt für 10 Minuten in der rotierenden Granuliertrommel, dann wird die granulierte thermoplastische Füllmasse aus der Trommel herausbefördert. Falls vorhanden, werden Partikel mit einem Durchmesser > 8 mm, unmittelbar oder nach Zwischenlagerung auf einer Siebvorrichtung, abgesiebt.

### Beispiel 2

Zusammensetzung des eingesetzten Mineralstoffgemisches (in Schritt a)):

| | |
|---|---|
| Bestandteil (i): | 5,0 M.-% Füller aus Kalksteinmehl/Gesteinsmehl/Kalkhydrat mit einer Korngröße von ≤ 0,063 mm |
| Bestandteil (ii): | 34,0 M.-% feine Gesteinskörnung mit einer Korngröße von > 0,063 mm bis ≤ 2 mm umfassend 70 M.-% Natursand |
| Bestandteil (iii): | 61,0 M.-% grobe Gesteinskörnung mit einer Korngröße von > 2 mm bis ≤ 16 mm |

(Anteil der Bestandteile (i) bis (iii) bezogen auf das Gesamtgewicht des Mineralstoffgemisches)
Eingesetztes Bindemittel (in Schritt a)):
5,0 M.-% Bitumen 50/70, optional umfassend FT-Wachs oder Montanwachs
(Anteil Bindemittel bezogen auf das Gesamtgewicht von mineralischen Bestandteilen und Bindemittel in der Vormischung (V))
Zur Durchführung des Herstellens der Asphalt-Vormischung (V) siehe vorangehendes Beispiel 1.

### Herstellen einer granulierten thermoplastischen Füllmasse (Granulierung):

Die im vorangehenden Schritt erhaltene Asphalt-Vormischung (V) wird zur räumlichen Entzerrung auf ein mehrteiliges Förderbandsystem mit jeweils steigender Geschwindigkeit der Förderbänder aufgebracht. Auf dem Förderbandsystem wird die Asphalt-Vormischung (V) mit einer Mischung aus Naturasphalt- und Gummipulver (1,5M.-% in Bezug auf die Asphalt-Vormischung (V), Massenverhältnis Naturasphaltpulver/ Gummipulver = 2/1) gleichmäßig bestreut und die Asphalt-Vormischung (V) in eine Granuliertrommel gefördert. Zu Anfang des Granuliervorgangs wird Kieselgur (1,0 M.-% in Bezug auf die Asphalt-Vormischung (V)) als Granulierhilfe im ersten Drittel der Trommel zugegeben. Die Mischung verbleibt für 20 Minuten in der rotierenden Granuliertrommel. Anschließend wird die Mischung im letzten Drittel der rotierenden Trommel für 1 Minute mit Acrylat (0,5 M.-% in Bezug auf die Asphalt-Vormischung (V)) bedüst. Die granulierte thermoplastische Füllmasse wird dann aus der Trommel herausbefördert und Partikel mit einem Durchmesser > 18 mm werden direkt oder später abgesiebt.

### Beispiel 3

Zusammensetzung des eingesetzten Mineralstoffgemisches (in Schritt a)):

| | |
|---|---|
| Bestandteil (i): | 26,0 M.-% Füller aus Kalksteinmehl/Gesteinsmehl/Kalkhydrat mit einer Korngröße von ≤ 0,063 mm |
| Bestandteil (ii): | 50,0 M.-% feine Gesteinskörnung mit einer Korngröße von > 0,063 mm bis ≤ 2 mm bestehend aus 100 M.-% Natursand |
| Bestandteil (iii): | 24,0 M.-% grobe Gesteinskörnung mit einer Korngröße von > 2 mm bis ≤ 5 mm |

(Anteil der Bestandteile (i) bis (iii) bezogen auf das Gesamtgewicht des Mineralstoffgemisches)
Eingesetztes Bindemittel (in Schritt a)):
11,1 M.-% Bitumen 70/100, optional umfassend FT-Wachs
(Anteil Bindemittel bezogen auf das Gesamtgewicht von mineralischen Bestandteilen und Bindemittel in der Vormischung (V))
Zur Durchführung des Herstellens der Asphalt-Vormischung (V) siehe vorangehendes Beispiel 1.

### Herstellen einer granulierten thermoplastischen Füllmasse (Granulierung):

Die im vorangehenden Schritt erhaltene Asphalt-Vormischung (V) wird in eine rotierende Granuliertrommel eingebracht, wobei unmittelbar vor oder nach dem Einbringen in die Granuliertrommel eine Granulierhilfe in Form von Kalkhydrat (0,5 M.-% in Bezug auf die Asphalt-Vormischung (V)) aufdosiert wird, vorzugsweise gleichzeitig damit. Die Mischung verbleibt für 20 Minuten in der rotierenden Granuliertrommel, wobei in den letzten 5 Minuten Diatomeenerde (1,0 M.-% in Bezug auf die Asphalt-Vormischung (V)) in das letzte Drittel der Trommel dosiert wird. Die granulierte thermoplastische Füllmasse wird dann aus der Trommel herausbefördert und Partikel mit einem Durchmesser > 6 mm werden abgeschoben. Die granulierte thermoplastische Füllmasse wird zwischengelagert und ist bereit zur Auslieferung.

Optional kann nach dem Abschiebeschritt eine weitere Zumischung von Kieselgur (1,5 M.-% in Bezug auf die granulierte thermoplastische Füllmasse) in einem Pflugscharmischer zur Erhöhung der Lagerstabilität der granulierten thermoplastischen Füllmasse für Lieferungen in wärmere Regionen und/oder für weitere Transportstrecken erfolgen.

## Patentansprüche

1. Verfahren zur Herstellung einer granulierten thermoplastischen Füllmasse, bestehend aus oder umfassend folgende Schritte:
a) Bereitstellen von wenigstens einem mineralischen Bestandteil und wenigstens einem Bitumen-haltigen Bindemittel, sowie optional einem oder mehreren weiteren Bestandteilen,
und Erhitzen und Vermischen der bereitgestellten Bestandteile auf eine Temperatur im Bereich von 70 bis 250 °C, bevorzugt von 150 bis 200 °C, besonders bevorzugt bis 180 °C, um eine Asphalt-Vormischung (V) zu erhalten,
wobei die Gesamtmenge an mineralischem/n Bestanteil(en), bezogen auf das Gesamtgewicht der Asphalt-Vormischung (V), im Bereich von 40 bis 99 M.-%, vorzugsweise von 75 bis 98 M.-%, besonders bevorzugt im Bereich von 90 bis 96 M.-%, liegt,
b) Einbringen der Asphalt-Vormischung (V) aus Schritt a) in einen kontinuierlich rotierenden Behälter und kontinuierliche Bewegung der Asphalt-Vormischung (V) in besagtem Behälter zur Abkühlung der Asphalt-Vormischung (V) und zur Herstellung der granulierten thermoplastischen Füllmasse,
c) Zugabe eines oder Zugabe von mehreren, vorzugsweise mineralischen, Trennmitteln und/oder anderer/weiterer Bestandteile in trockener, gelöster oder dispergierter Form zur Asphalt-Vormischung (V) vor und/oder während des Einbringens der Asphalt-Vormischung (V) in den kontinuierlich rotierenden Behälter in Schritt b) und/oder zur Asphalt-Vormischung (V) bzw. granulierten thermoplastischen Füllmasse während des kontinuierlichen Bewegens in Schritt b),
wobei der/die andere(n)/weitere(n) Bestandteil(e), falls vorhanden, ausgewählt ist/sind aus der Gruppe bestehend aus Polymerpulvern, Wachspulvern, Gummimehlen, Naturasphaltpulvern, Fettsäureamiden, Haftverbesserern, Kalkhydraten, Cellulosefaserstoffen, Farbpigmenten, Kalksteinmehlen, modifizierten Kalksteinmehlen, Zeolithen und Acrylaten, vorzugsweise Acrylaten mit Polymerzusatz,
wobei das/die Trennmittel in Schritt c), falls vorhanden, ausgewählt ist/sind aus der Gruppe bestehend aus Polymerpulvern, Wachspulvern, Gummimehlen, Naturasphaltpulvern, Haftverbesserern, Kalkhydraten, Cellulosefaserstoffen, Farbpigmenten, Kalksteinmehlen, modifizierten Kalksteinmehlen, Kieselguren, Diatomeenerden, Zeolithen und Acrylaten,
c1) weiteres Absenken der Temperatur der Asphalt-Vormischung (V) bzw. der granulierten thermoplastischen Füllmasse durch teilweises oder vorzugsweise vollständiges Verdampfen des Lösungsmittels bzw. Dispersionsmittels, falls vorhanden, durch die Temperatur der Asphalt-Vormischung (V) bzw. der granulierten thermoplastischen Füllmasse,
d) Herausbefördern der granulierten thermoplastischen Füllmasse aus dem kontinuierlich rotierenden Behälter,
e) optional teilweises oder vollständiges Entfernen von Partikeln mit einem Durchmesser von > 30 mm, falls vorhanden, bevorzugt von > 15 mm, falls vorhanden, besonders bevorzugt von > 8 mm, falls vorhanden,
und
optional teilweises oder vollständiges Entfernen von Partikeln mit einem Durchmesser von < 0,5 mm, falls vorhanden, bevorzugt von < 1,0 mm, falls vorhanden, besonders bevorzugt von < 2,0 mm, falls vorhanden,
wobei zwischen Schritt a) und Schritt b) folgender weiterer Schritt stattfindet:
Aufbringen der in Schritt a) erhaltenen Asphalt-Vormischung (V) auf ein mehrteiliges Förderbandsystem mit jeweils steigender Geschwindigkeit der Förderbänder zur räumlichen Entzerrung der Asphalt-Vormischung (V).

2. Verfahren nach Anspruch 1, wobei die Asphalt-Vormischung (V) bzw. die granulierte thermoplastische Füllmasse ein Mineralstoffgemisch umfasst, bestehend aus oder enthaltend, jeweils bezogen auf das Gesamtgewicht des Mineralstoffgemischs,
(i) 0 bis 30 M.-%, bevorzugt 0 bis 25 M.-%, besonders bevorzugt 0 bis 15 M.-%, Füllstoff aus mineralischen Bestandteilen mit einer Korngröße von ≤ 0,063 mm,
(ii) 0 bis 100 M.-%, bevorzugt 20 bis 100 M.-%, besonders bevorzugt 35 bis 100 M.-%, einer Gesteinskörnung aus Gesteinskörnern mit einer Korngröße im Bereich von > 0,063 mm bis ≤ 2 mm,
und
(iii) 0 bis 85 M.-%, bevorzugt 0 bis 70 M.-%, besonders bevorzugt 0 bis 60 M.-% einer Gesteinskörnung aus Gesteinskörnern mit einer Korngröße von > 2 mm,
wobei wenigstens einer der Bestandteile (i) bis (iii) > 0 M.-% ist.

3. Verfahren nach einem der vorangehenden Ansprüche, wobei die Asphalt-Vormischung (V) bzw. die granulierte thermoplastische Füllmasse einen oder mehrere Bestandteile der Gruppe bestehend aus Polymeren, Polymergranulaten, Polymerpulvern, Wachsen, vorzugsweise FT-Wachsen, Wachspulvern, Gummimehlen, Gummigranulaten, Naturasphaltpulvern, Naturasphaltgranulaten, Fettsäureamiden, Kalkhydraten, Cellulosefaserstoffen, Farbpigmenten, Rejuvenatoren, Kalksteinmehlen, modifizierten Kalksteinmehlen, Zeolithen, Gesteinsmehlen und Haftverbesserern, bevorzugt Haftverbesserern ausgewählt aus der Gruppe bestehend aus Fettpolyaminen, Fettmonoaminen, Aminoseifen und Stickstoffverbindungen, umfasst.

4. Verfahren zur Herstellung einer thermoplastischen Füllmasse nach einem der vorangehenden Ansprüche, wobei die Asphalt-Vormischung (V) bzw. die granulierte thermoplastische Füllmasse, vorzugsweise wobei der Bestandteil (i) des Mineralstoffgemischs, falls vorhanden, einen oder mehrere Bestandteil(e) aus der Gruppe bestehend aus Kalksteinmehlen, modifizierten Kalksteinmehlen, Gesteinsmehlen, Kalkhydraten und Zeolithen umfasst.

5. Verfahren zur Herstellung einer thermoplastischen Füllmasse nach einem der Ansprüche 2 bis 4, wobei der Bestandteil (ii) des Mineralstoffgemischs, falls vorhanden, bezogen auf das Gesamtgewicht des Bestandteils (ii) 10 M.-% oder mehr, vorzugsweise 70 M.-% oder mehr, Natursand umfasst oder aus Natursand besteht.

6. Verfahren zur Herstellung einer thermoplastischen Füllmasse nach einem der Ansprüche 2 bis 5, wobei der Bestandteil (iii) des Mineralstoffgemischs, falls vorhanden, aus Gesteinskörnern mit einer Korngröße im Bereich von > 2 mm bis ≤ 22 mm, bevorzugt von > 2 mm bis ≤ 16 mm, besonders bevorzugt von > 2 mm bis ≤ 5 mm besteht.

7. Verfahren zur Herstellung einer thermoplastischen Füllmasse nach einem der vorangehenden Ansprüche, wobei das Bitumen, falls vorhanden, eine Penetration im Bereich von 20 bis 220 (0,1 mm) gemessen nach DIN EN 1426 und/oder einen Erweichungspunkt im Bereich von 35 bis 90 °C, vorzugsweise von 35 bis 70 °C, gemessen nach DIN EN 1427 aufweist.

8. Verfahren zur Herstellung einer thermoplastischen Füllmasse nach einem der vorangehenden Ansprüche, wobei der kontinuierlich rotierende Behälter in Schritt b) eine Vorrichtung ausgewählt aus der Gruppe bestehend aus Granulierteller und Rund- bzw. Granuliertrommel ist.

9. Verfahren
zum Beseitigen von Oberflächenschäden in Beton-, Pflaster- oder Asphaltflächen oder
zum Schließen von Bohrlöchern oder
zum Schließen von Fahrbahnaufbrüchen oder
zum Schließen von Fugen von Hochbauten,
umfassend folgende Schritte:
- Bereitstellen einer granulierten thermoplastischen Füllmasse durch ein Verfahren gemäß einem der Ansprüche 1 bis 8,
- Einbringen bzw. Aufbringen der granulierten thermoplastischen Füllmasse in bzw. auf die beschädigte Beton-, Pflaster- oder Asphaltfläche bzw. das zu verschließende Bohrloch bzw. den zu verschließenden Fahrbahnaufbruch bzw. die zu schließende Fuge,
wobei die granulierte thermoplastische Füllmasse vor dem Ein- bzw. Aufbringen auf eine Temperatur im Bereich von 120 bis 230 °C, vorzugsweise auf 130 bis 170 °C, erhitzt wird.

10. Verfahren nach Anspruch 9, wobei die granulierte thermoplastische Füllmasse vor dem Ein- bzw. Aufbringen in einer transportablen Asphaltheizvorrichtung zum Aufheizen und Warmhalten von granulatförmigem Asphalt, mit einer Heiz- und Misch-Kammer, die einen Einlass zum Einfüllen von granulatförmigem Asphalt und einen Auslass zum Abgeben von aufgeheiztem Asphalt aufweist, einer Heizeinrichtung zum Aufheizen von in der Kammer befindlichem Asphalt, und einer antreibbaren Förderschnecke zum Mischen und Fördern von in der Kammer befindlichem Asphalt zwischen dem Einlass und dem Auslass, erhitzt wird.

## Claims

1. A method for manufacturing a granulated thermoplastic filling compound, consisting of or comprising the following steps:
a) providing at least one mineral component and at least one bitumen containing binder, as well as optionally one or more further components,
and heating and mixing of the provided components to a temperature in a range of 70 to 250°C, preferably of 150 to 200°C, more preferably to 180°C, to receive an asphalt pre-mix (V),
wherein the total amount of mineral component(s), with regard to the total mass of the asphalt pre-mix (V), is in a range of 40 to 99% by weight, preferably of 75 to 98 % by weight, more preferably in a range of 90 to 96% by weight,
b) introducing the asphalt pre-mix (V) obtained in step a) to a continuously rotating container and continuous movement of the asphalt pre-mix (V) in said container for chilling of the asphalt pre-mix (V) and for manufacturing the granulated thermoplastic filling compound,
c) addition of one or addition of several, preferably mineral, separating agent(s) and/or other/further components in dry, dissolved or dispersed form to the asphalt pre-mix (V) before and/or during the introduction of the asphalt pre-mix (V) to the continuously, rotating container in step b) and/or to the asphalt pre-mix (V) or granulated thermoplastic filling compound during the continuous movement in step b),
wherein the other/further components), if present, is/are selected from the group consisting of polymer powders, wax powders, rubberflours, natural asphalt powders, fatty acid amides, bonding enhancers, chalk hydrates, cellulose fiber compounds, colour pigments, powdered limestones, modified powdered limestones, zeolites and acrylates, preferably acrylates with the addition of polymers,
wherein the separating agent(s) in step c), if present, is/are selected from the group consisting of polymer powders, wax powders, rubber flours, natural asphalt powders, bonding enhancers, chalk hydrates, cellulose fiber compounds, colour pigments, powdered limestones, modified powdered limestones, kieselguhrs, diatomaceous earths, zeolites and acrylates,
c1) further lowering of the temperature of the asphalt pre-mix (V) or of the granulated thermoplastic filling compound by partial or preferably complete vaporisation of the solvent or dispersion agent, if present, by the temperature of the asphalt pre-mix (V) or of the granulated thermoplastic filling compound,
d) conveying of the granulated thermoplastic filling compound out of the continuously rotating container,
e) optionally partial or complete removal of particles with a diameter of > 30 mm, if present, preferably of > 15 mm, if present, more preferably of > 8 mm, if present,
and
optionally partial or complete removal of particles with a diameter of < 0.5 mm, if present, preferably < 1.0 mm, if present, more preferably of < 2.0 mm, if present,
wherein the following additional step takes place between step a) and step b):
applying the asphalt pre-mix (V) obtained in step a) to a multi-part conveying band system with an increasing velocity of the conveying bands in each case for spatial equalisation of the asphalt pre-mix (V).

2. Method according to claim 1, wherein the asphalt pre-mix (V) or the granulated thermoplastic filling compound comprises a mineral aggregate, consisting of or comprising, with regard to the total mass of the mineral aggregate, respectively,
(i) 0 to 30 % by weight, preferably 0 to 25 % by weight, more preferably 0 to 15 % by weight, filler from mineral components with particle size of ≤ 0.063 mm,
(ii) 0 to 100 % by weight, preferably 20 to 100 % by weight, more preferably 35 to 100% by weight, of an aggregate from rock particles with a patricle size in a range of > 0.063 mm to ≤ 2 mm,
and
(iii) 0 to 85 % by weight, preferably 0 to 70 % by weight, more preferably 0 to 60 % by weight of an aggregate from rock particles with a particle size of > 2mm,
wherein at least one of the components (i) to (iii) is > 0 % by weight.

3. Method according to any one of the preceeding claims, wherein the asphalt pre-mix (V) or the granulated thermoplastic filling compound comprises one or more component(s) from the group consisting of polymers, polymer granulates, polymer powders, waxes, preferably FT-waxes, wax powders, rubber flours, rubber granulates, natural asphalt powders, natural asphalt granulates, fatty acid amides, chalk hydrates, cellulose fiber compounds, colour pigments, rejuvenators, powdered limestones, modified powdered limestones, zeolites, rock flours and bonding enhancers, preferably bonding enhancers selected from the group consisting of fatty polyamides, fatty monoamines, amino soaps and nitrogen compounds.

4. Method for manufacturing a thermoplastic filling compound according to any one of the preceeding claims, wherein the asphalt pre-mix (V) or the granulated thermoplastic filling compound, preferably wherein the component (i) of the mineral aggregate, if present, comprises one or more component(s) from the group consisting of powdered limestones, modified powdered limestones, rock flours, chalk hydrates and zeolites.

5. Method for manufacturing a thermoplastic filling compound according to one of the claims 2 to 4, wherein the component (ii) of the mineral aggregate, if present, with regard to the total weight of the component (ii) comprises 10 % by weight or more, preferably 70 % by weight or more, natural sand or consists of natural sand.

6. Method for manufacturing a thermoplastic filling compound according to any one of claims 2 to 5, wherein the component (iii) of the mineral aggregate, if present, consistins of rock patricles with a particle size in a range of > 2 mm to ≤ 22 mm, preferably of > 2 mm to ≤ 16 mm, more preferably of > 2 mm to ≤ 5 mm.

7. Method for manufacturing a thermoplastic filling compound according to any one of the preceeding claims, wherein the bitumen, if present, has a penetration in a range of 10 to 220 (0.1 mm), measured according to DIN EN 1426 and/or a softening point in a range of 35 to 90 °C, preferably of 35 to 70 °C, measured according to DIN EN 1427.

8. Method for manufacturing a thermoplastic filling compound according to any one of the preceeding claims, wherein the continuously rotating container in step b) is a device selected from the group consisting of a pan granulator and a round or granulating drum.

9. A method
for removal of surface damages in concrete, paving or asphalt areas or
for closing of drilling holes or
for closing of roadway breakup or
for closing of joints of building constructions,
comprising the following steps:
- providing a granulated thermoplastic filling compound by a method according to any one of the claims 1 to 8,
- introducing or applying of the granulated thermoplastic filling compound in or rather on the damaged concrete, paving or asphalt area or on the drilling hole to be closed or on the roadway breakup to be closed or on the joint to be closed,
wherein the granulated thermoplastic filling compound is heated to a temperature in a range of 120 to 230 °C, preferably of 130 to 170 °C, prior to the introduction or application.

10. Method according to claim 9, wherein the granulated thermoplastic filling compound is heated prior to the introduction or application, in a transportable asphalt heating device for heating of granulated asphalt and keeping it warm, with a heating and mixing chamber, which has an inlet for filling in granulate asphalt and an outlet for emitting of heated asphalt, a heating equipment for heating asphalt present in the chamber, and a drivable screw conveyor for mixing and conveying asphalt present in the chamber between inlet and outlet.

## Revendications

1. Procédé pour fabriquer une masse de remplissage thermoplastique granulée composé ou comprenant les étapes suivantes :
a) fournir au moins un composant minéral et au moins un liant contenant du bitume, ainsi que, facultativement, un ou plusieurs autres composants,
et chauffer et mélanger les composants fournis à une température située dans la plage de 70 à 250 °C, de préférence de 150 à 200 °C, de manière particulièrement préférée, jusqu'à 180 °C, afin d'obtenir un prémélange d'asphalte (V),
dans lequel la quantité totale de composant/s minéral/minéraux, par rapport à la masse totale du prémélange d'asphalte (V), se situe dans une plage comprise entre 40 et 99 % en masse, de préférence entre 75 et 98 % en masse, de manière particulièrement préférée, entre 90 et 96 % en masse,
b) injecter le prémélange d'asphalte (V) de l'étape a) dans un récipient en rotation continue et déplacer en continu le prémélange d'asphalte (V) dans ledit récipient pour refroidir le prémélange d'asphalte (V) et produire la masse de remplissage thermoplastique granulée,
c) addition d'un ou addition de plusieurs agents antiagglomérants, de préférence minéraux, et/ou d'autres composants sous forme sèche, dissoute ou dispersée au prémélange d'asphalte (V) avant et/ou pendant l'injection, à l'étape b), du prémélange d'asphalte (V) dans le récipient en rotation continue et/ou au prémélange d'asphalte (V) ou à la masse de remplissage thermoplastique granulée pendant le déplacement continu de l'étape b),
dans lequel le/les autre/s composant/s (supplémentaire/s), le cas échéant, est/sont sélectionné/s dans le groupe constitué par les poudres polymères, les poudres de cire, les farines de caoutchouc, les poudres d'asphalte naturel, les amides d'acides gras, les promoteurs d'adhérence, les hydroxydes de calcium, les matières en fibres de cellulose, les pigments colorants, les farines de pierre calcaire, les farines de pierre calcaire modifiées, les zéolites et acrylates, de préférence, des acrylates avec addition de polymères,
dans lequel le/les agents antiagglomérant/s, à l'étape c), le cas échéant, est/sont sélectionné/s dans le groupe constitué par les poudres polymères, les poudres de cire, les farines de caoutchouc, les poudres d'asphalte naturel, les promoteurs d'adhérence, les hydroxydes de calcium, les matières en fibres de cellulose, les pigments colorants, les farines de pierre calcaire, les farines de pierre calcaire modifiées, les kieselgurs, les terres à diatomées, les zéolites et acrylates,
c1) abaissement supplémentaire de la température du prémélange d'asphalte (V) ou de la masse thermoplastique granulée par évaporation partielle ou, de préférence, complète du solvant ou de l'agent de dispersion, le cas échéant, par la température du prémélange d'asphalte (V) ou de la masse thermoplastique granulée,
d) évacuation par transport de la masse de remplissage thermoplastique granulée hors du récipient en rotation continue,
e) facultativement, élimination partielle ou totale des particules d'un diamètre > 30 mm, si de telles particules sont présentes, de préférence, > 15 mm, si de telles particules sont présentes, de manière particulièrement préférée, > 8 mm, si de telles particules sont présentes,
et
facultativement, élimination partielle ou totale des particules d'un diamètre < 0,5 mm, si de telles particules sont présentes, de préférence, < 1,0 mm, si de telles particules sont présentes, de manière particulièrement préférée, < 2,0 mm, si de telles particules sont présentes,
dans lequel l'étape supplémentaire suivante intervient entre l'étape a) et l'étape b) :
application du prémélange d'asphalte (V) obtenu à l'étape a) sur un système de bande transporteuse en plusieurs parties, avec respectivement augmentation de la vitesse des bandes transporteuses pour l'égalisation spatiale du prémélange d'asphalte (V).

2. Procédé selon la revendication 1, dans lequel le prémélange d'asphalte (V) ou la masse thermoplastique granulée comprend un mélange de matières minérales constitué de ou contenant, respectivement par rapport à la masse totale du mélange de matières minérales,
(i) 0 à 30 % en masse, de préférence 0 à 25 % en masse, de manière particulièrement préférée, 0 à 15 % en masse de matière de remplissage en composants minéraux avec une dimension de grain de ≤ 0,063 mm,
(ii) 0 à 100 % en masse, de préférence, 20 à 100 % en masse, de manière particulièrement préférée, 35 à 100 % en masse d'un granulat de roche composé de grains de roche avec une dimension de grain située dans la plage de > 0,063 mm à ≤ 2 mm,
et
(iii) 0 à 85 % en masse, de préférence, 0 à 70 % en masse, de manière particulièrement préférée, 0 à 60 % en masse d'un granulat de roche composé de grains de roche avec une dimension de grain > 2 mm,
dans lequel l'un au moins des composants (i) à (iii) est présent à > 0 % en masse.

3. Procédé selon l'une des revendications précédentes, dans lequel le prémélange d'asphalte (V) ou la masse de remplissage thermoplastique granulée contient un ou plusieurs composants du groupe composé par les polymères, les granulés polymères, les poudres polymères, les cires, de préférence les cires Fischer-Tropsch, les poudres de cire, les farines de caoutchouc, les granulés de caoutchouc, les poudres d'asphalte naturel, les granulés d'asphalte naturel, les amides d'acide gras, les hydroxydes de calcium, les matières en fibres de cellulose, les pigments colorants, les régénérateurs, les farines de pierre calcaire, les farines de pierre calcaire modifiées, les zéolites, les farines de roche et les promoteurs d'adhérence, de préférence des promoteurs d'adhérence sélectionnés dans le groupe constitué des polyamines grasses, des monoamines grasses, des savons aminés et des composés azotés.

4. Procédé pour fabriquer une masse de remplissage thermoplastique selon l'une des revendications précédentes, dans lequel le prémélange d'asphalte (V) ou la masse de remplissage thermoplastique granulée, de préférence, dans lequel le composant (i) du mélange de matières minérales, s'il est présent, comprend un ou plusieurs composants issu/s du groupe constitué par les farines de pierre calcaire, les farines de pierre calcaire modifiées, les farines de roche, les hydroxydes de calcium et les zéolites.

5. Procédé pour fabriquer une masse de remplissage thermoplastique selon l'une des revendications 2 à 4, dans lequel le composant (ii) du mélange de matières minérales, s'il est présent, par rapport à la masse totale du composant (ii), comprend 10 % en masse ou plus, de préférence 70 % en masse ou plus de sable naturel ou se compose de sable naturel.

6. Procédé pour fabriquer une masse de remplissage thermoplastique selon l'une des revendications 2 à 5, dans lequel le composant (iii) du mélange de matières minérales, s'il est présent, est constitué de grains de roche avec une dimension de grain située dans la plage de > 2 mm à ≤ 22 mm, de préférence, de > 2 mm à ≤ 16 mm, de manière particulièrement préférée, de > 2 mm à ≤ 5 mm.

7. Procédé pour fabriquer une masse de remplissage thermoplastique selon l'une des revendications précédentes, dans lequel le bitume, s'il est présent, présente une pénétration dans la plage de 20 à 220 (0,1 mm) mesurée selon DIN EN 1426 et/ou un point de ramollissement dans la plage de 35 à 90 °C, de préférence, de 35 à 70 °C, mesuré selon DIN EN 1427.

8. Procédé pour fabriquer une masse de remplissage thermoplastique selon l'une des revendications précédentes, dans lequel le récipient en rotation continue à l'étape b) est un dispositif sélectionné dans le groupe constitué par un disque de granulation et un tambour rond ou de granulation.

9. Procédé
pour éliminer des dommages de surface sur des surfaces en béton, en pavés ou en asphalte ou
pour boucher des trous de perçage ou
pour boucher des défonçages de chaussées ou
pour boucher des joints de constructions en hauteur,
comprenant les étapes suivantes :
- fournir une masse thermoplastique granulée par un procédé selon l'une quelconque des revendications 1 à 8,
- injecter ou appliquer la masse de remplissage thermoplastique granulée dans ou sur la surface en béton, en pavés ou en asphalte endommagée ou le trou de perçage, le défonçage de chaussées ou le joint à boucher, dans lequel la masse de remplissage thermoplastique granulée est chauffée à une température dans la plage de 120 à 230 °C, de préférence de 130 à 170 °C, avant l'injection ou l'application.

10. Procédé selon la revendication 9, dans lequel la masse de remplissage thermoplastique granulée, avant l'injection ou l'application, est chauffée dans un dispositif de chauffage d'asphalte transportable pour chauffer et maintenir à chaud l'asphalte granulaire, comportant une chambre de chauffage et de mélange possédant une entrée pour remplir l'asphalte granulaire et une sortie pour déverser l'asphalte chauffé, un dispositif de chauffage pour chauffer l'asphalte contenu dans la chambre, et une vis de transport pouvant être entrainée pour mélanger et transporter l'asphalte contenu dans la chambre entre l'entrée et la sortie.
